# EUROPEAN PATENT APPLICATION

(11) **EP 1 463 059 A2**
(43) Date of publication of application: **29.09.2004**
(21) Application number: 04006988.2
(22) Date of filing: 23.03.2004
(51) Int. Cl.: G11B 27/10, G11B 27/32, G11B 19/02, H04N 5/775, H04N 5/781, G11B 27/34, H04N 5/445

(54) **Recording and reproduction apparatus**

(30) Priority: 24.03.2003 JP 2003079619
(71) Applicant: Orion Electric Company, Ltd., Takefu-shi, Fukui-ken (JP)
(72) Inventor: Ozaki, Koichi, Takefu-shi Fukui-ken (JP)
(74) Representative: Kirschner, Klaus Dieter, Dipl.-Phys.

(57) **Abstract**

This invention is intended to enhance search accuracy for searching recorded program files and to ensure finding a desired program. Video and voice data on a received program is recorded in a hard disk and a program file is stored. Concurrently, voice data is extracted from the video and voice data, converted into text data, and a data file is created from the text data. A keyword input as a voice is converted into a text, and a database consisting of a plurality of data files is searched by a pattern matching. The program files including words relating to the keyword are displayed.

## Description

The present invention relates to a recording and reproduction apparatus for recording a received program or the like in a randomly-accessible recording medium, and for reproducing the recorded program.

A recording and reproduction apparatus which uses a randomly-accessible recording medium such as a hard disk or a DVD can record a plurality of programs. In reproducing one of the programs, the apparatus displays a list of recorded program information and selects an arbitrary program. If many programs are in the list, it is difficult to find a desired program.

Therefore, during program reservation recording or after program recording, programs are classified by categories such as drama, news and sports, and the category of each program is recorded as category information on the program. Based on the category information, the programs are narrowed down and the desired program is found from the narrowed-down programs.

However, even if the programs are narrowed down according to the categories, many programs are still present after narrowing down as long as the user records programs every week. It is, therefore, difficult to find a specific program from the many recorded programs. In order to search for cuisines using green peppers, for example, even if the user narrows down the recorded programs to cooking programs according to the categories, a plurality of programs are still present and it is impossible to narrow down the programs to a specific program.

Therefore, with a view of facilitating selection of the desired program, Japanese Patent Application Laid-Open No. 2001-94912 (paragraphs [0009] and [0010]) discloses creating program content data having EPG (electronic program guide) data on each program correspond to a storage position of recording data on the program, searching the program content data based on a keyword input as a voice, and selecting and reproducing one program.

If the EPG data is used, a keyword search is conducted to limited data. For this reason, if a search is conducted using a keyword relating to a specific content, the user is sometimes unable to find the desired program. If a search is conducted using a general keyword, the search hits many programs, making it difficult to find the desired program. The search using the EPG data cannot, therefore, realizes a high accuracy search. Besides, a processing circuit is required to acquire the EPG data. Due to this, the search using the EPG data is not applicable to all types of recording and reproduction apparatus.

The present invention has been achieved in view of the conventional disadvantages. It is an object of the present invention to provide a recording and reproduction apparatus capable of ensuring searching a desired program based on input recording data without the need of using EPG data.

This object is achieved by the method and the system of the independant claims. Advantageous embodiments of the invention are characterized in the sub-claims.

According to one aspect of the present invention, there is provided a recording and reproduction apparatus comprising: storage means for storing recording data including at least voice data; database creation means for creating a database by converting the voice data in the recording data into text data; input means for inputting a keyword; and search means for searching the database based on the keyword.

The database comprised of text data is created only from the voice data in each stored file. Due to this, the database thoroughly covers contents of all the files. By inputting a keyword and conducting a full-text search to this database, files including words relating to the keyword are detected. By further narrowing down these files, it is possible to ensure finding a desired file.

Recording data on each stored file is comprised of video data and voice data or comprised of only the voice data. The database creation means includes voice to data conversion means for extracting the voice data from the input recording data, and for converting the extracted voice data into text data, and database storage means for storing the text data as the database. The recording and reproduction apparatus also includes cutout means for cutting out words from the text data. The database storage means stores the cut out words as a database linked to the file. Thus, the database comprised of the text data based on the voice data can be created for each file.

The text data is comprised of kanas, the kanas being Japanese syllabic alphabets. If the text data is comprised of kanas, it is possible to prevent a word written in Chinese characters in the text data from being erroneously converted into a homonym. The text data may be foreign language text data. In this case, the text data may be comprised of alphabets.

The input means inputs a voice or a character. If the voice is input, the input means converts the input voice into text data. The search means detects files by making a pattern matching between the keyword and the words in the database. In the pattern matching, words matched with or similar to the keyword are found from the database. Namely, words matched with or similar to the keyword are found and files including the words are specified. The files thus detected are output in the form of a list.

If many files are to be searched, the files are classified according to categories in advance so as to use category information on each file in a search. Namely, the search is conducted based on the keyword after narrowing down the files according to the category information. By doing so, the search can be conducted using a specific keyword after the number of search target files is decreased. Therefore, search time can be reduced and search accuracy can be enhanced.

Advantageous embodiments of the invention are now described with reference to the drawings in which:
Fig. 1 is a schematic block diagram of a recording and reproduction apparatus according to one embodiment of the present invention;
Fig. 2 depicts structures of recorded files;
Fig. 3 is a flowchart for creating a database;
Fig. 4 depicts the configuration of a data file;
Fig. 5 is a flow chart for conducting a keyword search; and
Fig. 6A depicts a keyword input screen, and Fig. 6B depicts a search result display screen.

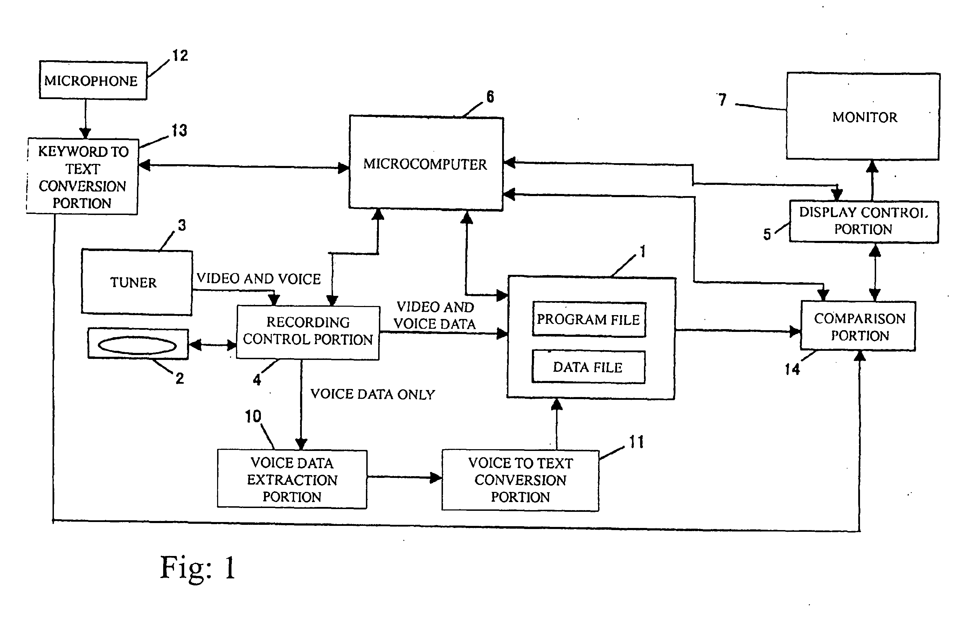

Fig. 1 depicts a recording and reproduction apparatus according to one embodiment of the present invention. The recording and reproduction apparatus uses a hard disk 1 as a randomly-accessible recording medium. The recording and reproduction apparatus can also use a detachable recording medium such as a DVD 2. In this embodiment, it is assumed that the recording and reproduction apparatus mainly uses the hard disk 1.

This recording and reproduction apparatus includes a tuner 3, a recording and reproduction portion 4, a display control portion 5, a control portion 6, and an operation portion such as a remote controller. The tuner 3 receives signals from terrestrial broadcast stations and satellite broadcast stations, and signals from a cable network. The tuner 3 selects signals on a selected channel and outputs video and voice signals of a received program to the recording and reproduction portion 4. The recording and reproduction portion 4 modulates the video and voice signals, converts the signals to digital signals, encodes the digital video and voice signals, and records the encoded signals as video and voice data in the hard disk 1. The video and voice data is written as a program file in a predetermined area of the hard disk 1. The program file is thus stored in the hard disk 1.

If the recorded program is to be reproduced, the recording and reproduction portion 4 reads the program file from the hard disk 1, decodes the encoded video and voice signals, converts the digital video and voice signals to analog video and voice signals, and outputs the analog video and voice signals to the display control portion 5. The display control portion 5 outputs the video signal to a monitor 7 serving as a video signal display unit, and outputs the voice signal to a loudspeaker.

The control portion 6 including a microcomputer controls the tuner 3, the recording and reproduction portion 4, and the display control portion 5 based on a content input from the operation portion, records the video and voice data input to the apparatus from the outside in the hard disk 1, and reproduces the video and voice data. The control portion 6 also records a user's input category as well as a recording date, a recording time, and a channel as program file management information.

The recording and reproduction apparatus further includes a voice data extraction portion 10 that extracts the voice data from the video and voice data to be recorded, and a voice to text conversion portion 11 that converts the voice data into text data so as to search a desired program file based on contents of recorded programs. The control portion 6 includes cutout means for cutting out words from the text data, and database storage means for storing the words thus cut out in the hard disk 1 as a data file linked to each program file. The recording and reproduction apparatus also includes a microphone 12 serving as a keyword input portion, a keyword to text conversion portion 13, and a comparison portion 14 that searches the database based on a keyword and that outputs program files including words relating to the keyword.

The voice data extraction portion 10 separates the voice data from all pieces of input video and voice data during program recording using a well-known voice data recognition IC. The voice to text conversion portion 11 analyzes the voice data using a well-known voice data analysis IC, eliminates sounds such as a music, converts only human voices into character codes, and creates the text data.

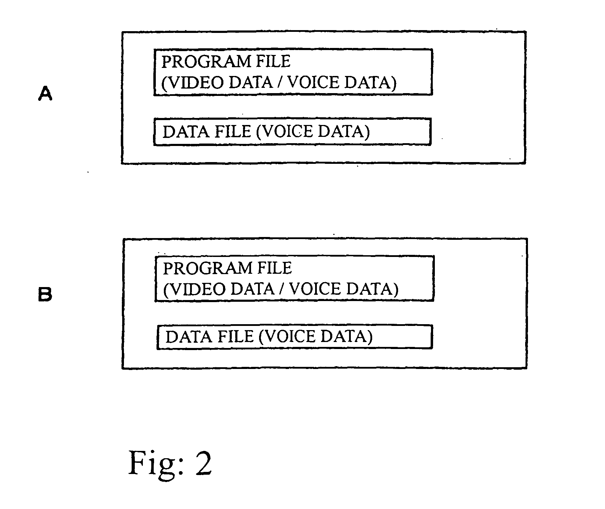

The cutout means included in the control portion 6 composes kana (Japanese syllabic alphabet) sentences such as "KYO NO RYORI WA HANBAGU TO PIMAN NO NIKU-ZUME DESU. SATE, SAISHO NI NIKU KARA DESUGA (LET'S COOK HAMBURGER AND GREEN PEPPER STUFFED WITH MEAT TODAY. FIRST, MEAT...)" as the text data. If the text data is thus comprised of kanas, it is possible to prevent a word written in Chinese characters in the text data from being erroneously converted into a homonym. The database storage means records the text data comprised of kanas in the hard disk 1 as one data file. As shown in Fig. 2, the hard disk 1 records a program file and a data file for each of programs A and B. In the hard disk 1, each program file is made correspond to each data file so that the both files are linked to each other. By collecting data files for respective programs, a search database is created.

The keyword to text conversion portion 13 recognizes a voice input from the microphone 12 using the well-known voice data analysis IC, sets the voice as the voice data, and creates keyword text data based on the voice data. The comparison portion 14 makes a pattern matching between the input keyword and words in the data files, selects data files including the words matched with the keyword, and outputs a list of program files linked to the selected data files to the display control portion 5.

It is noted that the voice to text conversion portion 11 that converts the voice data into the text data and the keyword to text conversion portion 13 possess the same function. Instead of providing the portions 11 and 13 separately, a text conversion portion shared between the portions 11 and 13 may be provided. In the latter case, in a recording phase and a search phase, a switching circuit such as a switching element is controlled in response to an instruction from the control portion 6, and the voice data to be input to the text conversion portion is switched.

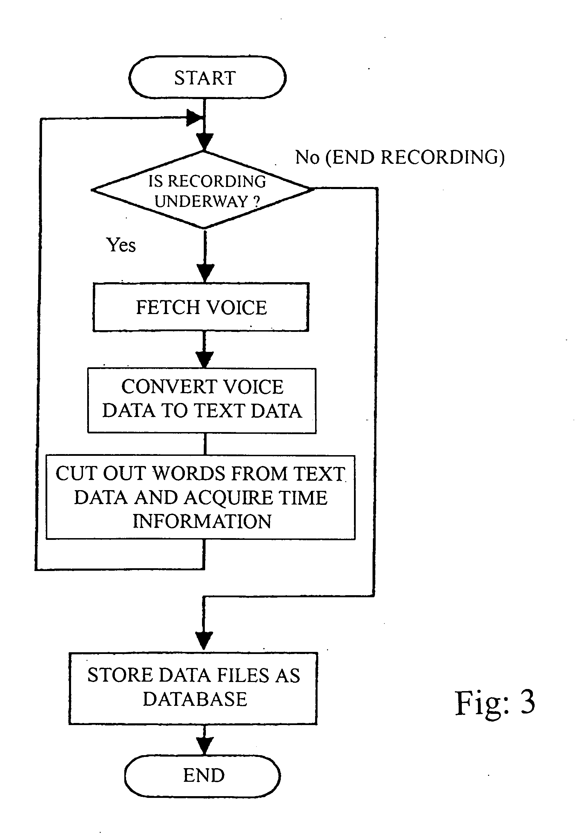

Procedures for creating a recorded program database will next be described. As shown in Fig. 3, the apparatus starts recording a received program. The recording and reproduction portion 4 records the input video and voice data in the hard disk 1, and creates a program file. During this recording, a data file for the program is created. The voice data extraction portion 10 extracts the voice data from the input video and voice data, and temporarily fetches the extracted voice data into a memory. The voice to text conversion portion 11 converts the voice data into text data.

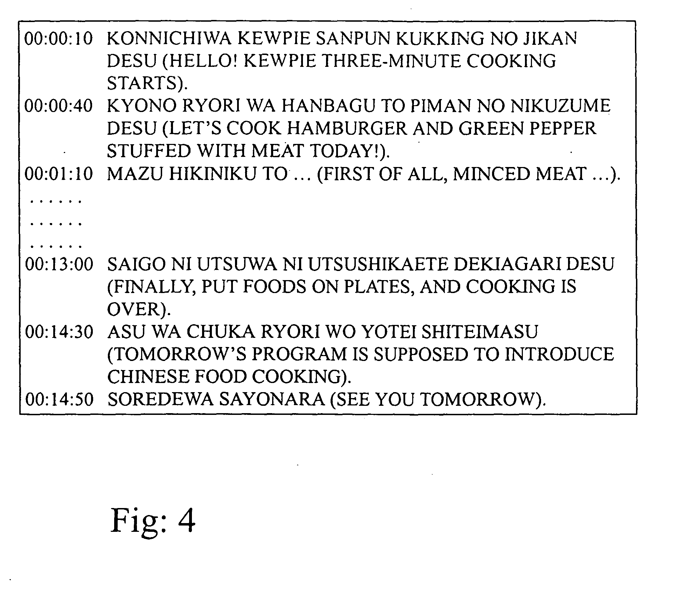

The control portion 6 cuts out words from the text data so as to be able to compose a series of sentences, and records the words thus cut out in the hard disk 1 as kana sentences. Simultaneously the control portion 6 acquires a counter value as time information and stores the acquired counter value corresponding to the kana sentence. These procedures are repeated until the program recording is finished. When the recording is finished, one data file as shown in Fig. 4 is completed. The data file is made correspond to the program file, and stored in the hard disk 1. Thus, all the words appearing in the program are converted into a text, the database in which time information on the program is added to the data is created.

A size of the data file is far smaller than that of the program file. Namely, the size of the program file for a one-hour program is a minimum of one gigabyte. The size of the data file is as small as 21.6 kilobytes with two bytes per word and 10,800 words per hour (three words/second x 60 minutes). Thus, the size of the data file is only 0.002% of that of the program file. Even if the data file is recorded, the recorded data file does not cast a heavy burden on the recording medium. Therefore, the database may be stored not in the hard disk 1 but in the nonvolatile memory. If so, a communication rate between the nonvolatile memory and the control portion 6 is high, making it possible to reduce search time.

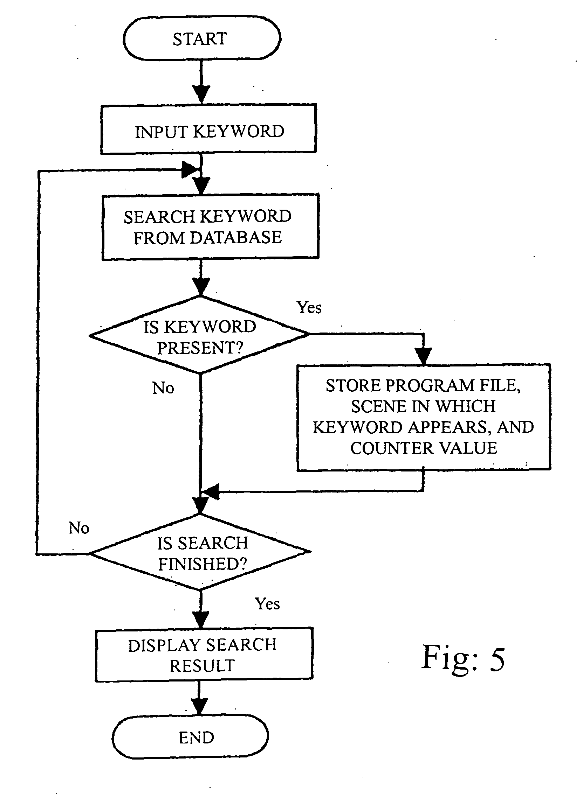

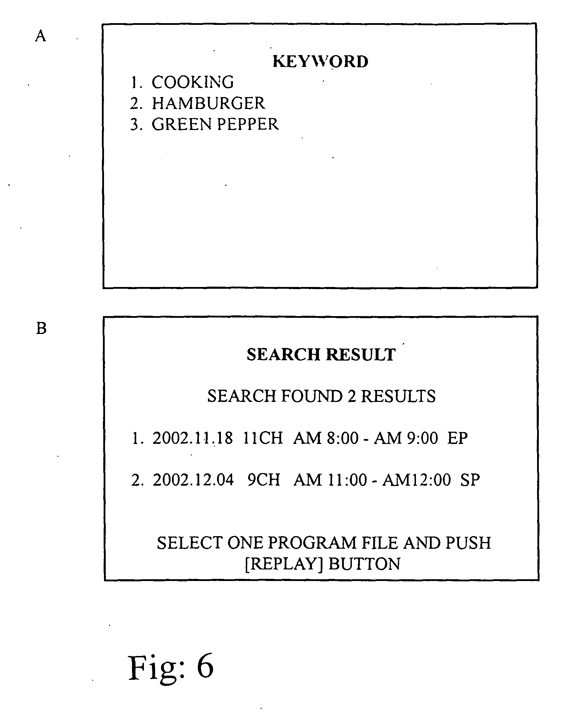

Procedures for searching the recorded program will be described. As shown in Fig. 5, the user designates a search mode from a menu to allow the apparatus to start a search. The user inputs a word as the keyword through the microphone 12. The number of keywords is not limited to one but may be two or more. The input voice is converted into text data by the keyword to text conversion portion 13. The input keyword is displayed on a screen of the monitor 7 as shown in Fig. 6A.

The comparison portion 14 makes a pattern matching between the text data on the keyword and each data file in the database. If a word matched with the keyword is present in the data file, a program file relating to the data file including the word is specified. A counter value is stored as time information on time of a scene in which the keyword appears in the program file. Video data on the scene is acquired, and stored in the memory as a thumbnail image. The time information is simultaneously recorded with creating the data file so as to make the data file correspond to the video of the program file. Therefore, when a certain word appears, the scene corresponding to the time at which the word appears can be output as the thumbnail image.

When the search for all the data files is finished, a search result is displayed on the screen of the monitor 7. As shown in Fig. 6B, management information on searched program files is displayed. If a reproduction key is operated, the program files are reproduced from the start. If one of the program files is selected, the stored thumbnail image is displayed as a detail of the selected program file.

As can be understood, by converting words appearing in each program into data without exception and creating the database, lots of information can be searched. Therefore, by inputting information to be searched as an appropriate keyword, it is possible to conduct a refine search and to ensure searching the desired program.

If many program files are stored in the hard disk 1, the search sometimes hits many program files. Therefore, using the category information on each program file, the number of search target program files is decreased. Specifically, a category is selected and a search is conducted using the category so as to narrow down the search target program files. Thereafter, a detailed keyword is input and a search is conducted using the keyword. By doing so, the number of program files hit by the search can be decreased and the search time can be reduced. Besides, since the program files which include the keyword but which have irrelevant contents are not output, the search can be conducted with high accuracy.

The present invention is not limited to the embodiment stated so far. Many changes and modifications can be made to the embodiment within the scope of the present invention. As the search target recording medium, any randomly-accessible recording medium such as a DVD, a CD, or a semiconductor memory other than the hard disk may be used. The recording and reproduction apparatus includes therein one or a plurality of types of these recording mediums.

Files each including recording data on a recorded conference, lecture, or music containing lyrics may be searched as recording data containing voice data other than the received program file. The voice data may be converted into text data comprised of alphabets. The keyword input is not limited to the voice input through the microphone but may be character input through an external device such as keys on the remote controller or a personal computer. In making the pattern matching with respect to the keyword, files including words not completely matched with the keyword but partially matched with or similar to the keyword may be selected. By further narrowing down the selected files, the search accuracy can be enhanced.

As is evident from the description given so far, according to the present invention, by searching the database created from pieces of voice data contained in the recorded files based on the input keyword, the search can be conducted using lots of information with enhanced search accuracy. Accordingly, the refined search can be conducted, making it possible to ensure finding the file of the desired program or the like.

## Claims

1. A recording and reproduction apparatus comprising:
storage means for storing recording data including at least voice data;
database creation means for creating a database by converting the voice data in the recording data into text data;
input means for inputting a keyword; and
search means for searching the database based on the keyword.

2. The apparatus of claim 1, wherein the storage means comprise storage means for storing recording data including input voice data or video and voice data as files.

3. The apparatus of claim 1 or 2, wherein database creation means comprises voice to data conversion means for extracting the voice data from the recording data including voice data or video and voice data, and for converting the extracted voice data into text data.

4. The apparatus of claim 1, wherein the search means for searching the database based on the keyword comprise means for outputting the files including the voice data relating to the keyword.

5. The apparatus of any of the preceding claims 2 to 4, comprising:
cutout means for cutting out words from the text data; and
database storage means for storing the words cut out in the storage medium as a database linked to the files.

6. The apparatus of any of the preceding claims 2 to 5, wherein
each of the files includes category information, and
the search means conducts a search based on the keyword after narrowing down the files according to the category information.

7. The apparatus of any one of the preceding claims, wherein the input means converts the keyword input as a voice into text data, and the search means compares the text data on the keyword with the text data in the database.

8. The apparatus of any one of the preceding claims, wherein the text data is comprised of kanas, the kanas being Japanese syllabic alphabets.
